# EUROPEAN PATENT APPLICATION

(11) **EP 0 921 698 A1**
(43) Date of publication of application: **09.06.1999**
(21) Application number: 97121403.6
(22) Date of filing: 05.12.1997
(51) Int. Cl.: H04Q 3/00

(54) **Traffic filtering based on destination address**

(71) Applicant: NOKIA TELECOMMUNICATIONS OY, 02150 Espoo (FI)
(72) Inventor: Boucelham, Jamel, 02730 Espoo (FI)
(74) Representative: Cohausz & Florack

(57) **Abstract**

Telecommunication network switching device comprising incoming circuit groups (CGR) to which incoming calls having an associated address information (B-number) are grouped, each of the circuit groups having a predetermined traffic load level, route selection means for routing the calls to their respective destination and seizure means for seizing congested circuit groups before the calls are passed through the subscriber line. The invention also refers to a method for traffic filtering in a telecommunication network of this type. The object of the invention is to achieve a telecommunications network and a method for traffic filtering which allows a more flexible filtering thus preventing unnecessary blocking of calls, e.g. emergency calls by observation and comparing means are provided for observing the traffic load level of a given circuit group (CGR) and for comparing the observed traffic load level with a threshold level being set by the operator of the network depending on the traffic situation at the destination (DEST 1, DEST 2...DEST k)of the call identified by the associated address information, whereby a call is automatically gapped if the threshold value is exceeded.

## Description

Telecommunications network switching device comprising incoming circuit groups to which incoming calls having an associated address information (B-number) are grouped, each of the circuit groups having a predetermined traffic load level, route selection means for routing the calls to their respective destination and seizure means for seizing congested circuit groups before the calls are passed through the subscriber line. The invention also refers to a method for traffic filtering in a telecommunications network of this type.

In telecommunication networks the incoming calls from subscriber lines are passed through a switching system ( 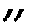 switch") the main task of which is to establish a real time connection between the subscriber and its destination. As a destination can be understood a B-subscriber like a usual telephone or a mobile phone (e.g. GSM Standard Mobile Phone) or an Internet destination, e.g. entertainment services. The switch has to analyse the address information of the subscriber to find out the destination. Especially, it is the task of the switching device to select the optimized route through the switch to get to the destination. Moreover, during the connection set-up phase the operation of the switch must be transparent to the operator.

When the connection is being set up, it might occur that the circuit group through which the calls are routed will be blocked because of an overload situation. This causes the restraint of all other calls of the same circuit group, i.e. that all normal calls, including emergency calls, will be blocked. The situation occurs when there is no restriction procedure in the circuit group for any of the calls. Therefore standard traffic filtering techniques have been developed. By using this kind of traffic filtering technique the number of calls per incoming circuit groups cannot be restricted.

It is known from 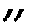 Telecom Perspectives", June 1997, page 65 to 68, that due to the increasing use of the Internet traffic jam occurs more and more. The internet affects the current public switched telephone network (PSTN) because the switch has not enough capacity to service all the customers who want to make a call at a particular time which results in severe blocking problems, especially the blocking of emergency calls.

It is the object of the present invention to achieve a telecommunications network and a method for traffic filtering which allows a more flexible filtering thus preventing unnecessary blocking of calls, such as emergency calls.

This object is achieved by the features in which observation and comparing means are provided for observing the traffic load level of a given circuit group and for comparing the observed traffic load level with a threshold level being set by the operator of the network depending on the traffic situation at the destination of the call identified by the associated address information, whereby a call is automatically gapped if the threshold value is exceeded. The method for traffic filtering according to the present invention is characterized in that in a particular incoming circuit group the respective traffic load level is observed and the value of the traffic load level is compared with a threshold value which has been set by the operator depending on the actual traffic situation at the destination of the call whereby, if the threshold value is achieved, the call is automatically gapped.

It is the central idea of the present invention that the traffic load level of the circuit group of an incoming call is observed and that this traffic load level is compared with the limiting value (threshold value) received from the destination of the call which was found on the basis of the address information. The mechanism according to the invention allows to control the proportion of calls directed to a specified service (i.e. identified service) to get a free circuit. Accordingly, during the set-up phase, the call will be gapped if it is routed to a predetermined address and is coming from the circuit group the load level of which was exceeded. For example, if the specified service is an internet entertainment service the threshold level is set very low because the importance of this service is desired to be low. On the other hand, if a call is an emergency call the threshold value is set very high in order to prevent blocking of this call. The threshold value represents the prospective capacity to be available for other than the identified service (e.g. Internet) to be able to get a free circuit. The operator can judge based on available traffic information which would be the optimum value. This value is user-definable and can be dynamically selected or updated. By using this method a seizure based traffic filtering method is realized, i.e. based on the seizure level of the circuit groups the decision is made whether the call is cancelled (gapped) or passed. In other words, by means of this method the calls directed to destinations like entertainment services are delayed until there is free capacity. In contrast to that the important or less time critical calls are maintained. Thus the calls of a loaded circuit group can be separated by the priority level and the ones routed to predetermined destinations can be cancelled while the other calls of the circuit group are allowed at the same time.

Preferred embodiments of the invention are described in the subclaims. A specific feature of a preferred embodiment is that the switching mechanism checks by the B-subscriber number whether the incoming/outgoing/transit calls belong to an identified service number, especially for internet services. If the call is not identified as belonging to a service of such kind there is no need for filtering according to the seizure based traffic filtering of the present invention. On the other hand, if a call is identified as belonging to this service, the seizure process based on the traffic filtering method according to the invention is proceeded. The invention is illustrated based on the following figures:
- Figure 1: shows a block diagram of a telecommunication network switching device of a conventional state of the art
- Figure 2: shows a telecommunication network switching device according to an embodiment of the present invention.

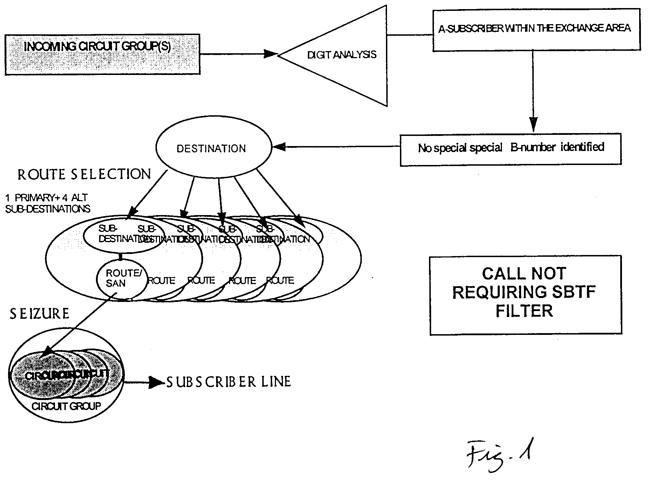

The block diagram according to figure 1 comprises incoming circuit groups at which calls arrive from subscriber lines (A-numbers) which are identified by an address information. Different calls are split up into a variety of circuit groups on standardized 2 Mbit/s line. The output of a digit analysis of the incoming circuit groups results in the definition of an A-subscriber within the exchange area.

In the following stage based on the subscriber B-number given by the address information each call is routed through a route selection means. The route selection means comprise a primary sub-destination circuit as well as a variety of (for example 4) sub-destination groups. At the output of these groups seizure means are comprised. In these seizure means it is checked whether each circuit is congested or not. If it is congested the circuit group is seized and the next alternative circuit group is used. After this, the call is addressed to the subscriber line (B-number).

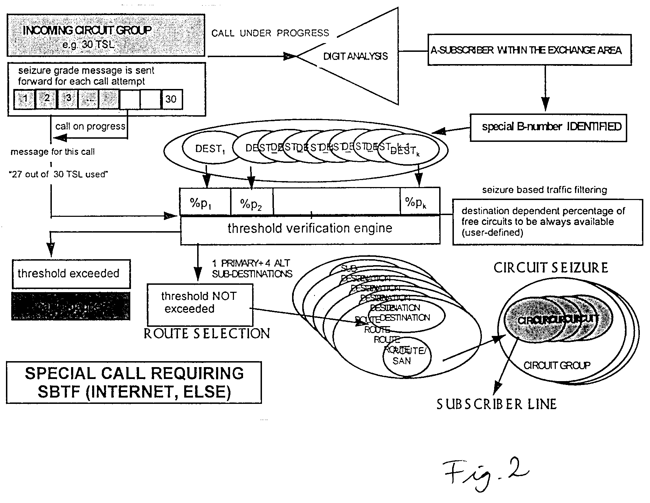

Figure 2 shows a block diagram according to the embodiment of the present invention. In addition to the block circuit diagram described in connection with figure 1 oberservation and comparing means are comprised within the telecommunication network device. The observation and comparing means are comprising a threshold verification engine which is comprised within the route selection means. Within the threshold verification engine to each of the destinations DEST 1...DEST k a specific operator definable percentage %p₁...%p₂...%pₖ of free circuits will always be available is defined by the operator of the network. These observation and comparing means are associated with the standardized 2 Mbit/s line circuit groups for the incoming calls.

Thus the traffic load level in each of the circuit groups is observed by the observation and comparing means, based on the threshold value %p₁...%pₖ corresponding to the allowed traffic fixed by the operator. These threshold values represent the prospective capacity to be available for other than the specified service (internet/other) to be able to get a free circuit. The operator can judge using available traffic information what would be an optimal value for that. This threshold value may be based on the experience of the operator taking into consideration the kind of the destination. The highest percentage of the threshold value is dedicated to those destinations which have emergency functions.

The output of the threshold verification engine decides whether each of the thresholds %p₁...%pₖ is exceeded or not exceeded.

If it is exceeded the call is gapped. If it is not exceeded, the call is processed by route selection means according to the conventional route selection method and the circuit seizure followed by the subscriber lines as described with respect to figure 1.

By using this method a seizure based traffic filtering (SBTF) is allowed during the set-up phase of a call. Thus according to the mechanism of the present invention the proportion of calls directed to specified service (internet/other) to get a free circuit is controlled and thereby access to vital (e.g. emergency) numbers is always guaranteed.

## Claims

1. Telecommunication network switching device comprising incoming circuit groups (CGR) to which incoming calls having an associated address information (B-number) are grouped, each of the circuit groups having a predetermined traffic load level, route selection means for routing the calls to their respective destination and seizure means for seizing congested circuit groups before the calls are passed through the subscriber line, **characterized in that** observation and comparing means are provided for observing the traffic load level of a given circuit group (CGR) and for comparing the observed traffic load level with a threshold level being set by the operator of the network depending on the traffic situation at the destination (DEST 1, DEST 2...DEST k)of the call identified by the associated address information, whereby a call is automatically gapped if the threshold value is exceeded.

2. Telecommunication network according to claim 1 **characterized in that** the threshold level is set by the operator according to the targeted priority level of the calls.

3. Telecommunication network according to claim 1 **characterized in that** the calls are routed to an identified service number, such as for Internet services.

4. Telecommunication network according to claim 1, **characterized in that** the traffic load level is predetermined by the availability of free incoming circuits.

5. Telecommunication network according to claim 1 **characterized in that** the switch comprises further means for time controlled routing.

6. Telecomunication network according to claim 1, **characterized in that** observation and comparing means are comprising a threshold verification engine for verifying the destination dependent user-defined percentage of always available free circuits.

7. Method for traffic filtering in a telecommunication network switching device comprising the steps in which incoming calls from subscriber lines are grouped to a variety of incoming circuit groups each of which having a predetermined traffic load level, the calls are routed according to their respective destination and congested circuit groups are seized before the calls are passed through the subscriber line **characterized in that** in a particular incoming circuit group the respective traffic load level is observed and the value of the traffic load level is compared with a threshold value which has been set by the operator depending on the actual traffic situation at the destination of the call whereby, if the threshold value is achieved, the call is automatically gapped.

8. Method according to claim 7, **characterized in that** the address information (B-number) of each call is checked whether or not it belongs to an identified service number, such as for Internet services.
